# EUROPÄISCHE PATENTANMELDUNG

(11) **EP 2 495 605 A1**
(43) Veröffentlichungstag der Anmeldung: **05.09.2012**
(21) Anmeldenummer: 12000824.8
(22) Anmeldetag: 09.02.2012
(51) Int. Cl.: G02C 1/02, F16B 39/34, F16B 39/28

(54) **Schraubverbindung, Brille**

(30) Priorität: 03.03.2011 DE 202011003897 U
(71) Anmelder: OBE Ohnmacht & Baumgärtner GmbH & Co. KG, 75228 Ispringen (DE)
(72) Erfinder: Bertsch, Stefan, 71665 Vainingen an der Enz (DE)
(74) Vertreter: Gleiss, Alf-Olav

(57) **Zusammenfassung**

Es wird eine Schraubverbindung (7) zur Verbindung eines Brillenglases (3) mit einem Brillengestellelement (4), insbesondere eines rahmenlosen Brillengestells (2), mit einer Schraube (8), die einen Schraubenkopf (9) und einen mit einem Außengewinde (11) versehenen Schraubenschaft (10) aufweist, mit einer Mutter (15), die ein mit dem Außengewinde (11) zusammenwirkendes beziehungsweise in Wirkverbindung bringbares Innengewinde (16) aufweist, sowie mit wenigstens einer Unterlegscheibe (21,31) vorgeschlagen. Die Schraubverbindung zeichnet sich dadurch aus, dass an einer dem Brillenglas (3) zugewandten/zuordenbaren Seite (14,17) des Schraubenkopfs (9) und/oder der Mutter (15) ein die Unterlegscheibe (21,31) bildendes Kunststoffelement (18,29) zu dessen Befestigung derart bereichsweise angeformt ist, dass der Schraubenkopf (9) beziehungsweise die Mutter im Wesentlichen frei zugängig ist.

## Beschreibung

Die Erfindung betrifft eine Schraubverbindung gemäß Oberbegriff des Anspruchs 1 sowie eine Brille gemäß Oberbegriff des Anspruchs 10.

Zum Befestigen eines Brillenglases an einem Brillengestellelement, insbesondere eines rahmenlosen Brillengestells, ist es bekannt, eine Schraubverbindung vorzusehen, mittels derer das Brillenglas und das Brillengestellelement aneinander befestigt werden. Eine derartige Schraubverbindung umfasst in der Regel eine Schraube, die einen Schraubenkopf und einen mit einem Außengewinde versehenen Schraubenschaft aufweist, sowie eine Mutter, die ein mit dem Außengewinde zusammenwirkendes beziehungsweise in Wirkverbindung bringbares Innengewinde aufweist. Der Schraubenschaft wird durch eine Öffnung in dem Brillenglas geführt, sodass der Schraubenkopf auf einer Seite des Brillenglases zum Aufliegen kommt. Auf der anderen Seite wird die Mutter auf den Schraubenschaft aufgedreht, wobei auf der einen oder der anderen Seite außerdem der Schraubenschaft noch eine Öffnung des Brillengestellelements durchgreift, sodass beim Zusammenschrauben Brillengestellelement und Brillenglas gegeneinander verspannt werden. Um die Drehbewegung der Schraube von dem Brillenglas zu entkoppeln, und um den beim Festziehen der Schraube auftretenden Druck großflächig auf das Brillenglas zu verteilen, ist es bekannt, eine Metallunterlegscheibe zwischen Schraubenkopf und Brillenglas und/oder zwischen Mutter und Brillenglas vorzusehen. Um darüber hinaus die Drehbewegung von dem Brillenglas zu entkoppeln, sodass beim Verschrauben keine Relativbewegung zwischen dem Brillenglas und der Schraubbewegung erfolgt, die das Brillenglas beschädigen könnte, wird darüber hinaus häufig eine Kunststoffunterlegscheibe vorgesehen, die zwischen der Metallunterlegscheibe und dem Brillenglas liegt.

Zum Erleichtern der Montage ist es darüber hinaus beispielsweise aus der Patentschrift US 5,508,758 bekannt, die Mutter mit einem Plastikgehäuse zu versehen, sodass die Mutter in dem Plastikgehäuse liegt und lediglich das Innengewinde frei zugängig ist. Hierdurch wird die Montage zwar erleichtert, da keine zusätzliche Kunststoffunterlegscheibe vorgesehen werden muss, jedoch müssen die Kräfte über das Plastikelement auf die Mutter übertragen werden, wobei das Plastikelement dabei leicht durch das Werkzeug beschädigt werden kann. Aus der japanischen Offenlegungsschrift JP 2002-202479 A ist eine ähnliche, eingehauste Mutter bekannt.

Der Erfindung liegt somit die Aufgabe zugrunde, eine Schraubverbindung sowie eine Brille zu schaffen, die einerseits einfach und sicher montierbar sind und andererseits vor einer Beschädigung durch ein angreifendes Werkzeug geschützt sind.

Die der Erfindung zugrunde liegende Aufgabe wird durch eine Schraubverbindung der oben genannten Art gelöst, die die Merkmale des Anspruchs 1 umfasst. Die Schraubverbindung zeichnet sich dadurch aus, dass an einer dem Brillenglas zugewandten/zuordenbaren Seiten des Schraubenkopfs und/oder der Mutter ein die Unterlegscheibe bildendes Kunststoffelement zu dessen Befestigung derart bereichsweise angeformt ist, dass der Schraubenkopf beziehungsweise die Mutter im Wesentlichen frei zugängig ist. Im Unterschied zu den im Stand der Technik vorgeschlagenen Lösungen ist erfindungsgemäß also vorgesehen, dass das Kunststoffelement nur bereichsweise an den Schraubenkopf beziehungsweise an die Mutter zu seiner Befestigung angeformt ist. Dabei wird die Befestigung des Kunststoffelements an dem Schraubenkopf beziehungsweise an der Mutter bevorzugt dadurch erreicht, dass beim Anformen ein Kraftschluss und/oder ein Formschluss gebildet wird, der das Kunststoffelement an dem Schraubenkopf beziehungsweise an der Mutter hält. Insbesondere weisen der Schraubenkopf und/oder die Mutter jeweils mindestens einen Hinterschnitt auf, der insbesondere in axialer Richtung gesehen von dem Kunststoffelement hintergriffen beziehungsweise umgriffen wird. Dadurch, dass das Kunststoffelement den Schraubenkopf beziehungsweise die Mutter nur bereichsweise umschließt, der Schraubenkopf beziehungsweise die Mutter also im Wesentlichen frei zugängig ist, kann das Werkzeug zum Befestigen der Schraubverbindung direkt an die Mutter beziehungsweise an den Schraubenkopf angesetzt werden, sodass die Kräfte nicht über das Kunststoffelement auf den Schraubenkopf beziehungsweise die Mutter übertragen werden müssen. Hierdurch wird zum einen eine direkte Krafteinleitung ermöglicht und zum anderen verhindert, dass das Kunststoffelement beim Ansetzen des Werkzeugs beschädigt wird. Zweckmäßigerweise sind die Schraube und die Mutter aus Metall gefertigt, sodass sie selbst unempfindlich gegenüber dem angreifenden Werkzeug sind.

Gemäß einer erfindungsgemäßen Ausführungsform ist das Kunststoffelement an der Schraubenmutter angeformt. Gemäß einer anderen Ausführungsform der Erfindung ist vorgesehen, dass das Kunststoffelement an dem Schraubenkopf angeformt ist. Gemäß einer besonders bevorzugten erfindungsgemäßen Ausführungsform ist vorgesehen, dass ein Kunststoffelement an der Schraubenmutter und ein anderes Kunststoffelement an dem Schraubenkopf, jeweils zur Bildung einer Unterlegscheibe, wie zuvor beschrieben, angeformt sind. Gemäß der zuletzt genannten Ausführungsform sind weitere Unterlegscheiben nicht mehr notwendig, sodass die Schraubverbindung allein aus der Schraube und der Mutter sowie den daran jeweils angeformten Kunststoffelementen besteht. Bei der Montage müssen lediglich Schraube und Mutter zusammengesetzt werden, sodass es nicht möglich ist, eine Unterlegscheibe bei der Montage zu vergessen. Allenfalls zwischen Brillenglas und Brillengestellelement ist gegebenenfalls eine weitere Unterlegscheibe, insbesondere die Kunststoffunterlegscheibe, vorzusehen.

Besonders bevorzugt ist das Kunststoffelement als angespritztes Kunststoffelement ausgebildet. Dabei lässt sich das Kunststoffelement beispielsweise mittels eines Mold-Verfahrens auf einfache Art und Weise an den Schraubenkopf oder an die Mutter anformen. Natürlich sind aber auch andere Möglichkeiten des Anformens des Kunststoffelements denkbar. Somit ist gemäß einer alternativen Ausführungsform vorgesehen, dass das Kunststoffelement aus einem elastischen Material besteht und zunächst separat hergestellt wird, um anschließend bereichsweise auf den Schraubenkopf oder die Mutter aufgezogen zu werden.

Gemäß einer vorteilhaften Weiterbildung der Erfindung ist vorgesehen, dass die dem Brillenglas zugewandte/zuordenbare Seite des Schraubenkopfs und/oder der Mutter jeweils einen sich insbesondere über den gesamten Umfang erstreckenden Radialsteg aufweist, der von dem Kunststoffelement zumindest im Wesentlichen umgeben ist. Der Radialsteg bildet den oben bereits genannten Hinterschnitt, der zum formschlüssigen Halten des Kunststoffelements an dem Schraubenkopf beziehungsweise der Mutter dient. Erstreckt sich der Radialsteg über den gesamten Umfang des Schraubenkopfs beziehungsweise der Mutter, so bildet der Radialsteg eine Unterlegscheibe, die von dem Kunststoffelement umgeben ist.

Besonders bevorzugt ist der Radialsteg einstückig mit dem Schraubenkopf beziehungsweise mit der Mutter ausgebildet, sodass der Radialsteg eine metallische Unterlegscheibe bildet, die von der Unterlegscheibe aus Kunststoff umgeben ist. Dadurch erhält die Schraubverbindung zusätzlich zu der durch das Kunststoffelement gebildeten Kunststoffunterlegscheibe eine Metallunterlegscheibe, die insbesondere zum Verteilen der Druckkräfte dient. Durch die integrierte Unterlegscheibe ist es möglich, die Bauhöhe der Mutter und damit auch die der Schraubverbindung zu reduzieren, da sich das Innengewinde bis in die Unterlegscheibe erstrecken kann. Gemäß einer besonders bevorzugten Weiterbildung der Erfindung ist vorgesehen, dass der Radialsteg und/oder das Kunststoffelement derart geformt sind, dass sie federnde Eigenschaften aufweisen, die einen Federdruck bewirken, der gegen den Druck der Schraubverbindung wirkt. Dadurch wird ein selbsttätiges Lösen der Schraubverbindung verhindert und ein spielfreier Verbund zwischen Brillenglas und Brillengestellelement gewährleistet.

Wie bereits erwähnt, sind die Schraube und die Mutter vorzugsweise aus Metall gefertigt. Insbesondere die Mutter ist besonders bevorzugt durch Metallpulverspritzguss gefertigt. Durch Herstellen der Mutter in einem Metallpulverspritzguss-Verfahren lässt sich die Geometrie der Mutter auf einfache Art und Weise darstellen. Dabei sind unterschiedlichste Antriebsformen der Mutter realisierbar, wie beispielsweise eine Sternform, ein Sechskant-, ein Vielzahl- oder ein Torxantrieb. Andere Antriebe, wie beispielsweise ein Schlitz auf der Oberseite der Mutter, können auch als Drehteil realisiert werden.

Vorzugsweise ist das Kunststoffelement als Drehsicherung ausgebildet. Hierzu weist das Kunststoffelement insbesondere ein Material auf, das vorteilhafte Reibeigenschaften aufweist, die ein Verdrehen des Kunststoffelements in Bezug auf das Brillenglas erschweren. Ebenso ist es denkbar, die dem Brillenglas zugeordnete Stirnfläche des Kunststoffelements mit einer Maserung oder Oberflächenstrukturierung zu versehen, die drehhemmend wirkt, um ein Verdrehen des Kunststoffteils auf dem Brillenglas zu erschweren oder zu verhindern.

Das Kunststoffelement ist bevorzugt, wie bereits erwähnt, zumindest bereichsweise elastisch verformbar ausgebildet. Dies kann einerseits zum Bilden eines Federelements und andererseits zum Bilden der Drehsicherung genutzt werden. Ebenso kann die elastische Verformbarkeit zum Anformen des separat hergestellten Kunststoffelements an den Schraubenkopf beziehungsweise die Mutter genutzt werden.

Gemäß einer vorteilhaften Weiterbildung der Erfindung ist vorgesehen, dass das Kunststoffelement auf seiner dem Glas zugewandten/zuordenbaren Seite eine in eine Durchgangsbohrung beziehungsweise Öffnung des Brillenglases einbringbare und den Schraubenschaft aufnehmende Hülse aufweist. Das Kunststoffelement bildet somit nicht nur die Unterlegscheibe der Mutter oder des Schraubenkopfs, sondern darüber hinaus eine das Brillenglas vor dem Schraubenschaft, insbesondere vor dem Außengewinde des Schraubenschafts schützende Hülse, die im montierten Zustand zwischen dem Brillenglas und dem Schraubenschaft liegt. Die Hülse erstreckt sich dabei bevorzugt axial derart weit, dass sie zumindest bereichsweise in den Durchbruch des Brillenglases hineinragt. Weisen sowohl die Mutter als auch der Schraubenkopf ein entsprechendes Kunststoffelement auf, so ragen bevorzugt beide Kunststoffelemente bereichsweise in die Öffnung, insbesondere Durchgangsbohrung, des Brillenglases hinein, zweckmäßigerweise ohne dabei in axialen Anlagekontakt zu geraten.

Vorzugsweise sind an dem Schraubenkopf und an der Mutter jeweils ein eine Unterlegscheibe bildendes Kunststoffelement, wie es oben stehend beschrieben wurde, angeformt.

Die der Erfindung zugrunde liegende Aufgabe wird weiterhin durch eine Brille der oben genannten Art gelöst, die die Merkmale des Anspruchs 10 aufweist. Die Brille zeichnet sich dadurch aus, dass sie mindestens eine Schraubverbindung aufweist, die wie oben beschrieben ausgebildet ist.

Ferner betrifft die Erfindung ein Verfahren zum Herstellen einer Schraubverbindung beziehungsweise einer Brille der oben genannten Art. Dabei zeichnet sich das Verfahren dadurch aus, dass an den Schraubenkopf und/oder die Mutter jeweils ein Kunststoffelement derart zu dessen Befestigung angeformt wird, dass der Schraubenkopf beziehungsweise die Mutter im Wesentlichen frei zugängig ist beziehungsweise bleibt. Besonders bevorzugt wird die Mutter durch Metallpulverspritzgießen hergestellt und anschließend das Kunststoffelement daran angeformt. Besonders bevorzugt erfolgt das Anformen des Kunststoffelements an den Schraubenkopf beziehungsweise die Mutter durch Anspritzen, insbesondere durch Injection-Molding.

Im Folgenden soll die Erfindung anhand der Zeichnung näher erläutert werden. Dazu zeigen
- Figur 1: eine Schraubverbindung einer Brille gemäß einem ersten Ausführungsbeispiel,
- Figuren 2A und 2B: ein erstes Ausführungsbeispiel einer Mutter der Schraubverbindung,
- Figuren 3A und 3B: ein weiteres Ausführungsbeispiel der Mutter,
- Figur 4: ein weiteres Ausführungsbeispiel der Mutter mit einer Sicherung gegen Lösen,
- Figuren 5A bis 5C: ein weiteres Ausführungsbeispiel der Mutter mit einer Sicherung gegen Lösen,
- Figuren 6A und 6B: ein weiteres Ausführungsbeispiel der Mutter als Drehteil,
- Figur 7: die Schraubverbindung gemäß einem zweiten Ausführungsbeispiel,
- Figur 8: ein Ausführungsbeispiel einer Schraube der Schraubverbindung und
- Figur 9: die Schraube gemäß einem alternativen Ausführungsbeispiel.

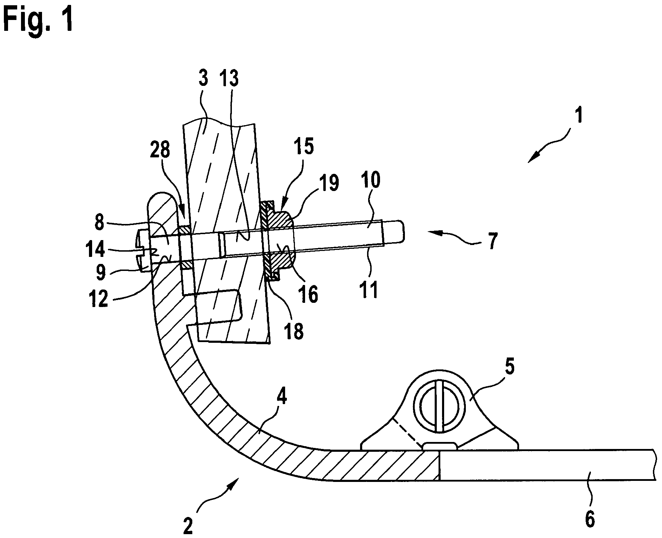

Figur 1 zeigt in einer vereinfachten Schnittdarstellung einen Abschnitt einer Brille 1, die ein rahmenloses Brillengestell zum Halten von Brillengläsern 3 aufweist. Der in Figur 1 dargestellte Abschnitt zeigt lediglich ein seitliches Brillengestellelement 4, das einendig durch ein Scharnier 5 mit einem Brillenbügel 6 verbunden ist. Anderendig ist das Brillengestellelement 4 mittels einer Schraubverbindung 7 mit dem Brillenglas 3 verbunden.

Die Schraubverbindung 7 umfasst eine Schraube 8, die einen Schraubenkopf 9 sowie einen Schraubenschaft 10 aufweist. Der Schraubenschaft 10 ist bereichsweise mit einem Außengewinde 11 versehen und erstreckt sich durch eine Öffnung des Brillengestellelements 4, die als Durchgangsbohrung 12 ausgebildet ist, sowie durch eine Öffnung des Brillenglases 3, die als Durchgangsbohrung 13 ausgebildet ist. Mit seiner unteren Seite 14 liegt der Schraubenkopf 9 auf dem Brillengestellelement 4 auf. Ferner umfasst die Schraubverbindung 7 eine Mutter 15, die mit einem Innengewinde 16 versehen ist, das mit dem Außengewinde 11 des Schraubenschafts 10 derart zusammenwirkt, dass die Mutter 15 auf den Schraubenschaft 10 aufschraubbar ist.

An die dem Brillenglas 3 zugewandte Seite 17 der Mutter 15 ist ein eine Unterlegscheibe bildendes Kunststoffelement 18 derart bereichsweise angeformt, dass die Mutter 15 im Wesentlichen frei zugängig ist. Insbesondere ist hierbei der sogenannte Antrieb der Mutter 15, der durch die von der Mutter 15 zur Verfügung gestellten Angriffsflächen für ein Werkzeug besteht, frei zugängig. Die Mutter 15 ist aus Metall, insbesondere durch ein Metallspritzgussverfahren, gefertigt und weist einen Mutterkopf 19 auf, der den Antrieb bildet.

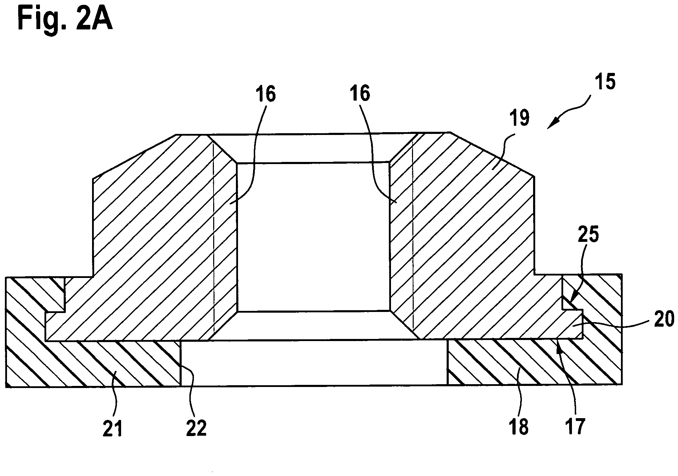

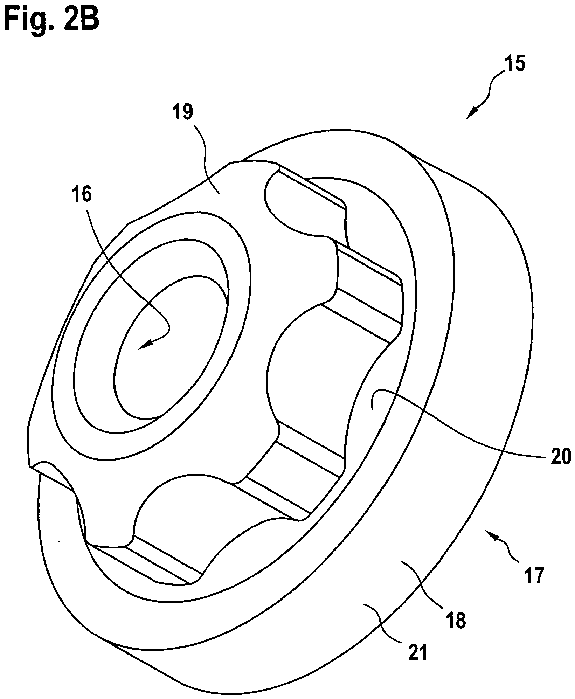

Mit Bezug auf Figuren 2 bis 6 sollen im Folgenden detaillierte Ausführungsbeispiele der Mutter 15 mit dem angeformten Kunststoffelement 18, das vorzugsweise als angespritztes Kunststoffelement ausgebildet ist, erläutert werden:

Figuren 2A und 2B zeigen die in Figur 1 dargestellte Mutter 15 in einer vergrößerten Schnittdarstellung (Figur 2A) sowie in einer perspektivischen Ansicht (Figur 2B). Wie am besten aus Figur 2B ersichtlich, ist der Antrieb der Mutter 15 als Sternantrieb ausgebildet. Figur 2A zeigt, dass an der dem Brillenglas 3 zuzuordnenden Seite 17 die Mutter 15 einen Radialsteg 20 aufweist, der sich über den gesamten Umfang der Mutter 15 erstreckt. Unter einem Radialsteg ist hierbei ein radial abstehender Vorsprung zu verstehen, der vorliegend scheibenförmig ausgebildet und an dem Grundkörper der Mutter 15 angeordnet ist. Der Radialsteg 20 bildet einen Hinterschnitt 25 der Mutter 15. Dazu ist der Radialsteg 20 in Axialerstreckung gesehen zweistufig ausgebildet, wobei der Radialsteg einen ersten Durchmesser und einen zweiten Durchmesser aufweist, und der axial weiter hinten gelegene Abschnitt des Radialstegs 20 den kleineren Durchmesser aufweist, um den Hinterschnitt 25 an der Rückseite des vorne liegenden Abschnitts zu bilden.

Das Kunststoffelement 18 ist durch Anspritzen an die Schraubenmutter 15, insbesondere an den Radialsteg 20 angeformt, sodass sich eine formschlüssige Verbindung zwischen der Mutter 15 und dem Kunststoffelement 18 ergibt, durch welche das Kunststoffelement 18 an der Mutter 15 befestigt ist. Das Kunststoffelement 18 erstreckt sich bereichsweise über die dem Brillenglas 3 zuwendbare Seite 17 der Mutter 19 und bildet somit eine Unterlegscheibe 21, die aus Kunststoff gefertigt ist. Koaxial zu der das Innengewinde 16 aufweisenden Öffnung der Mutter 15 weist auch das Kunststoffelement 18 eine Öffnung beziehungsweise eine Durchgangsbohrung 22 auf, wobei der Durchmesser der Durchgangsbohrung 22 größer ist als der Innendurchmesser der Öffnung der Mutter 15.

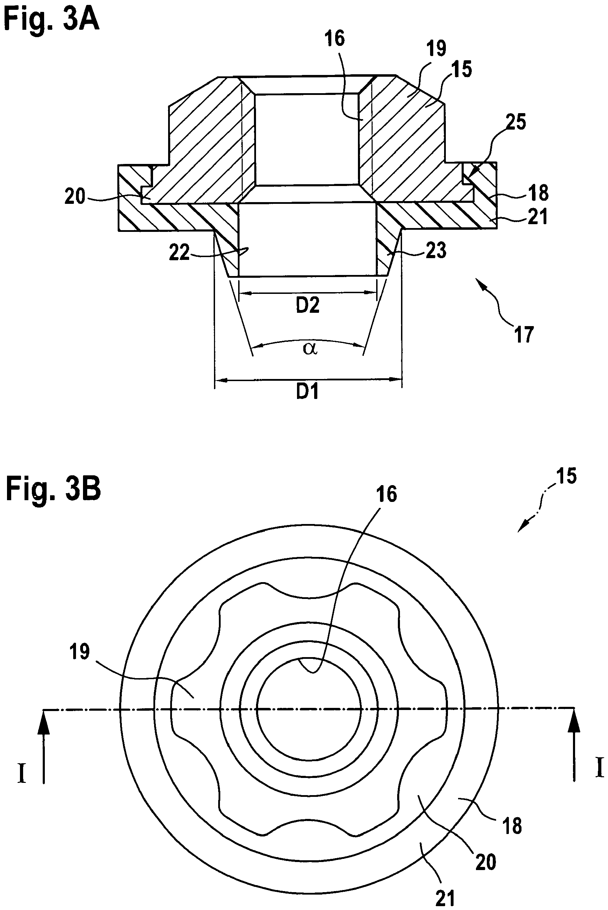

Figuren 3A und 3B zeigen eine vorteilhafte Weiterbildung der Mutter 15 in einer Schnittdarstellung (Figur 3A) und in einer Draufsicht (Figur 3B), wobei Figur 3A einen Schnitt entlang der Linie I - I der Figur 3B zeigt. Im Unterschied zu dem vorhergehenden Ausführungsbeispiel weist das Kunststoffelement 18 an seinem dem Brillenglas 3 zuzuwendenden/zuzuordnenden Ende eine Hülse 23 auf, die einstückig mit dem übrigen Kunststoffelement 18 ausgebildet ist. Die Hülse 23 ist koaxial zu der Durchgangsbohrung 22 ausgebildet und stellt eine Verlängerung in axialer Richtung dar. Während die Durchgangsbohrung 22 kreiszylinderförmig ausgebildet ist, ist die Außenseite der Hülse 23 kegelstumpfartig geformt, mit in Richtung des Brillenglases abnehmendem Durchmesser. Das der Schraube 15 zugeordnete Ende der Hülse 23 weist dadurch einen Durchmesser D1 auf, der kleiner oder gleich groß ist wie der Innendurchmesser D2 der Durchgangsbohrung 13 des Brillenglases 3. Somit ergibt sich beispielsweise ein Kegelwinkel von α = 30° des Kegelstumpfes. Die Hülse 23 wird bei der Montage in die Durchgangsbohrung 13 des Brillenglases 3 eingeführt, und dient im Wesentlichen dazu, das Brillenglas 3 von dem die Hülse 23 durchdringenden Schraubenschaft 10 und insbesondere dessen Außengewindes 11 zu schützen. Die kegelstumpfförmige Ausbildung der Hülse 23 führt hierbei zu einer automatischen Zentrierung der Mutter 15 an der Durchgangsbohrung 13 des Brillenglases 3.

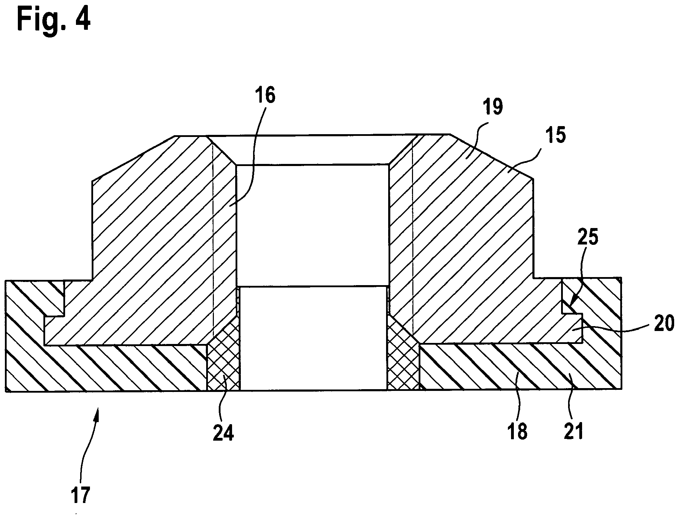

Figur 4 zeigt eine alternative Weiterbildung der Mutter 15 in einer Längsschnittdarstellung. Im Unterschied zu dem Ausführungsbeispiel gemäß Figur 2 ist hierbei vorgesehen, dass mindestens eine Kunststofflippe 24 vorgesehen ist, die sich in die Durchgangsbohrung der Mutter 15 radial derart weit erstreckt, dass sie bei der Montage in das Außengewinde 11 der Schraube 8 eingreift. Vorzugsweise sind mehrere derartiger Kunststofflippen 24 über den Innendurchmesser verteilt angeordnet, oder eine einzige Kunststofflippe 24, wie dargestellt, die sich über den gesamten Umfang der Durchgangsbohrung der Mutter 15 erstreckt. Dabei weist die Kunststofflippe 24 einen Innendurchmesser auf, der kleiner ist als der des Innengewindes 16. Dadurch, dass die Kunststofflippe 24 in Eingriff mit dem Außengewinde 11 des Schraubenschafts 10 bei der Montage gerät, wird eine Drehsicherung gegen Lösen der Mutter 15 gebildet. Bevorzugt sind die einen oder die mehreren Kunststofflippen 24 einstückig mit dem Kunststoffelement 18 ausgebildet.

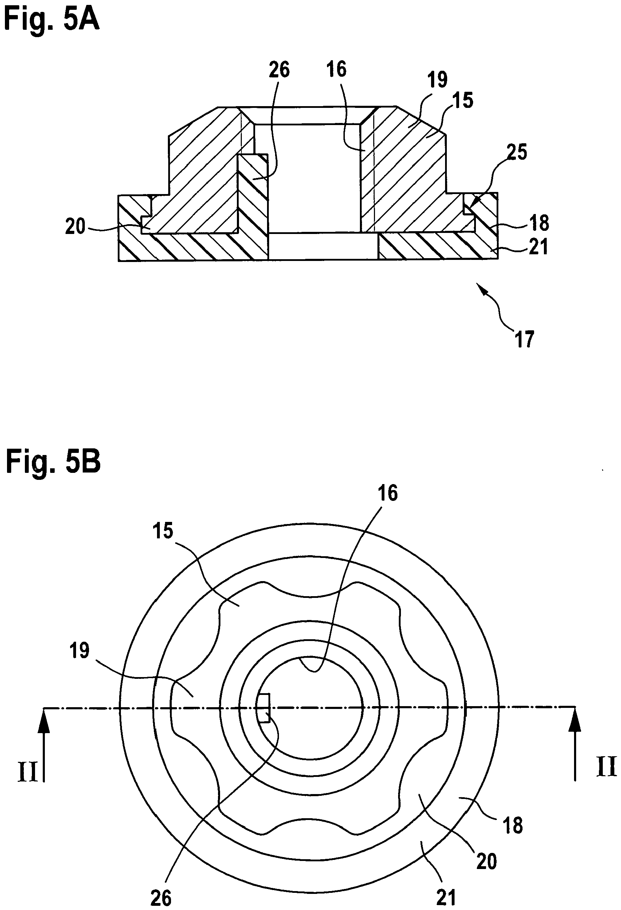

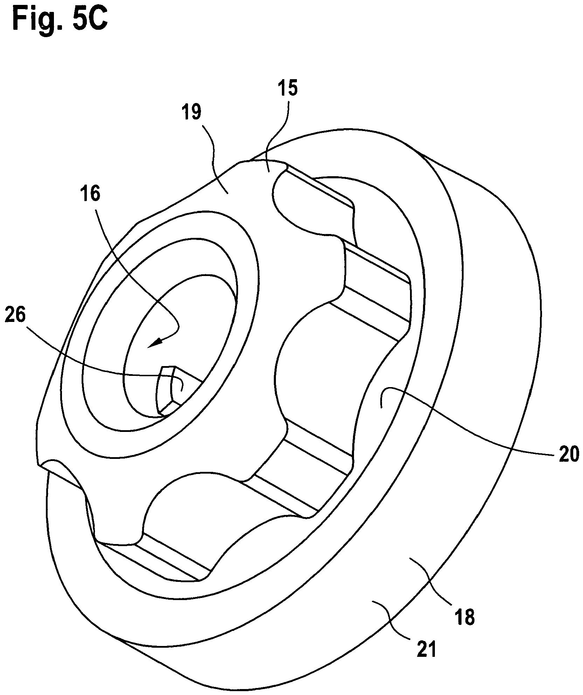

Figuren 5A bis 5C zeigen eine alternative Ausführungsform der Drehsicherung, bei welcher anstelle der Kunststofflippe 24 ein Kunststoffsteg 26 vorgesehen ist, der sich axial in das Innengewinde 16 der Mutter 15 hineinerstreckt. Der Kunststoffsteg 26 steht damit im montierten Zustand sowohl mit dem Innengewinde 16 als auch mit dem Außengewinde 11 in Eingriff. Figur 5A zeigt hierbei einen Längsschnitt durch die in Figur 5B, die eine Draufsicht auf die Mutter 15 darstellt, gezeigte Linie II - II, und Figur 5C eine perspektivische Darstellung. Auch hier ist der Kunststoffsteg 26 zweckmäßigerweise einstückig mit dem Kunststoffelement 18 ausgebildet und wird insofern beim Anspritzen des Kunststoffelements 18 mit erstellt.

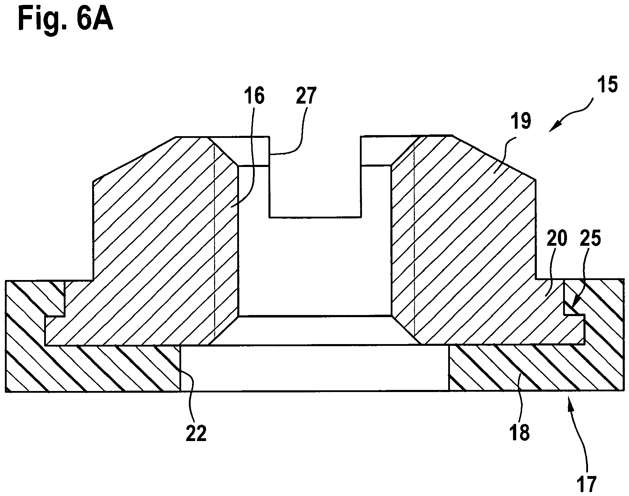

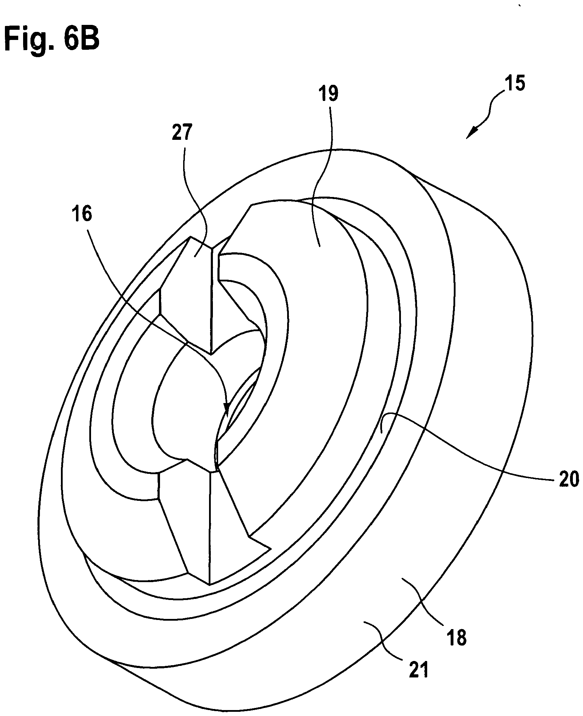

Figuren 6A und 6B zeigen eine alternative Ausführungsform der Mutter 15, die bevorzugt als Drehteil ausgebildet ist. Figur 6A zeigt hierbei eine Längsschnittdarstellung, während Figur 6B eine perspektivische Ansicht zeigt. Im Unterschied zu den vorhergehenden Ausführungsbeispielen ist der Antrieb der Mutter 15 nicht als Sternantrieb, sondern als Schlitzantrieb mit einem sogenannten Minusschlitz 27 ausgebildet. Ansonsten entspricht die Mutter 15 dem Ausführungsbeispiel gemäß Figuren 2A und 2B.

Die oben stehend beschriebenen Ausführungsbeispiele der Mutter 15 haben gemeinsam, dass die Kunststoffunterlegscheibe 21 durch das angeformte Kunststoffelement 18 gebildet wird. Die Unterlegscheibe 21 weist einen größeren Durchmesser als die Mutter 15 selbst auf und verteilt somit Kräfte, die beim Verschrauben auftreten, großflächig auf das Brillenglas 3. Durch die Ausbildung aus Kunststoff wird darüber hinaus das Brillenglas 3 vor Beschädigungen durch eine Drehbewegung der Mutter 15 auf dem Brillenglas 3 geschützt. Besonders bevorzugt ist das Kunststoffelement 18 bereichsweise elastisch ausgebildet, um sich an das gegebenenfalls gekrümmte Brillenglas 3 anzupassen. Darüber hinaus ist es denkbar, die dem Brillenglas 3 zugewandte Stirnfläche des Kunststoffelements 18 mit einer Maserung oder einem Profil zu versehen, oder durch Wahl des Kunststoffs mit derart hohen Reibwerten auszubilden, dass eine Drehsicherung gebildet wird.

Zusätzlich ist es denkbar, eine Metallunterlegscheibe vorzusehen, die der Mutter 15 zugeordnet und von dem Kunststoffelement 18 eingehaust ist, um eine verbesserte Kraftverteilung insbesondere in radialer Richtung, zu erreichen.

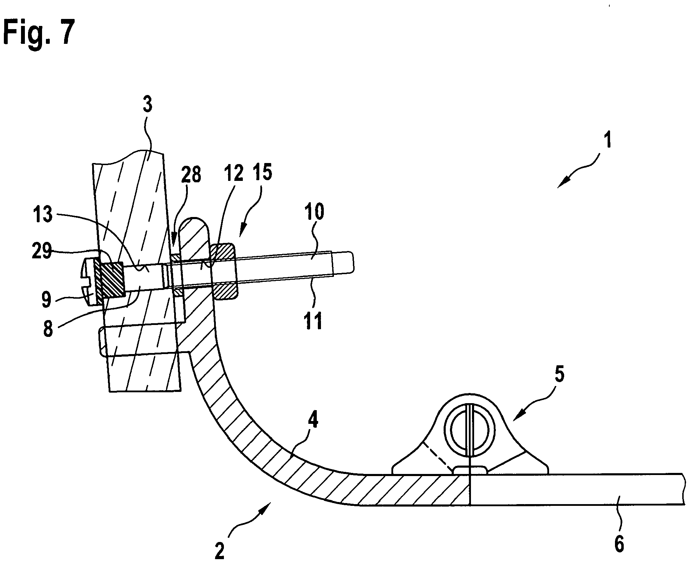

Figuren 7 bis 8 betreffen ein zweites Ausführungsbeispiel der Schraubverbindung 7, bei welcher das Brillenglas 3 nicht zwischen der Mutter 15 und dem Brillengestellelement 4, sondern zwischen dem Brillengestellelement 4 und dem Schraubenkopf 9 gehalten ist. Wie auch in Figur 1 dargestellt, ist zweckmäßigerweise eine weitere Kunststoffunterlegscheibe 28 zwischen dem Brillenglas 3 und dem Brillengestellelement 4 vorgesehen. Vorliegend ist die Unterlegscheibe 28 ebenfalls zwischen dem Brillenglas 3 und dem Brillengestellelement 4 angeordnet. Die Mutter 15 ist als einfache Mutter ohne angeformtes Kunststoffelement ausgebildet. Dafür ist an dem Schraubenkopf 8 ein Kunststoffelement 29 derart bereichsweise angeformt, dass der Schraubenkopf 9, insbesondere dessen Antrieb, frei zugängig ist.

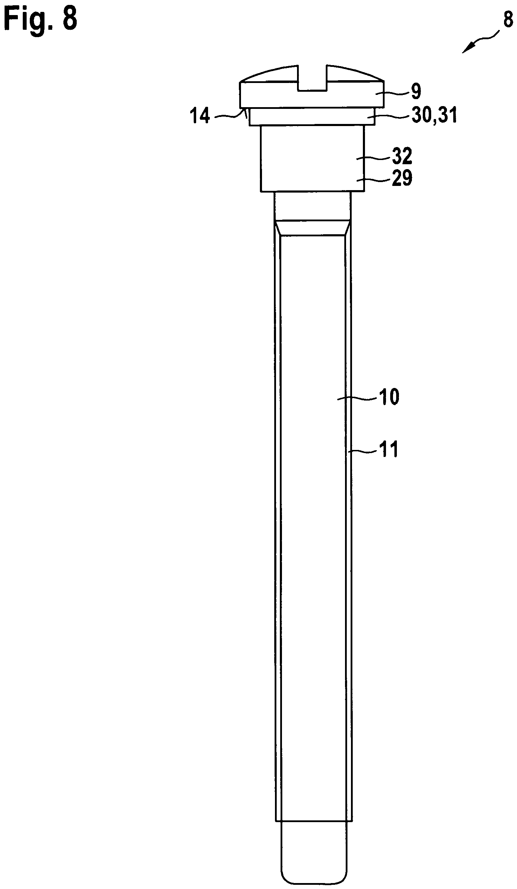

Figur 8 zeigt hierzu eine vergrößerte Detailansicht der Schraube 8, die aus Metall gefertigt ist. Das Kunststoffelement ist an die Seite 14 des Schraubenkopfs 9, insbesondere durch Anspritzen, angeformt. Das Kunststoffelement 29 ist dabei derart geformt, dass es einen ersten, dem Schraubenkopf zugewandten Abschnitt 30 aufweist, der eine Kunststoffunterlegscheibe 31 bildet, sowie einen zweiten, von dem Kopf 9 weg weisenden, eine Hülse 32 bildenden Abschnitt, der zum Einbringen in die Durchgangsbohrung 13 des Brillenglases 3 dient und insofern der zuvor beschriebenen Hülse 23 gleicht. Beide Abschnitte 30, 32 sind vorliegend kreiszylinderförmig ausgebildet. Jedoch ist es auch denkbar, insbesondere den Abschnitt der Hülse 32, beziehungsweise dessen Mantelaußenwand, kegelstumpfartig auszubilden, um eine automatische Zentrierung des Schraubenkopfs 9 bezüglich der Durchgangsbohrung 13 beim Einführen der Schraube 8 zu erreichen. Gemäß dem vorliegenden Ausführungsbeispiel ist der Außendurchmesser des Abschnitts 30 beziehungsweise der Unterlegscheibe 31 kleiner als der Außendurchmesser des Schraubenkopfs 9.

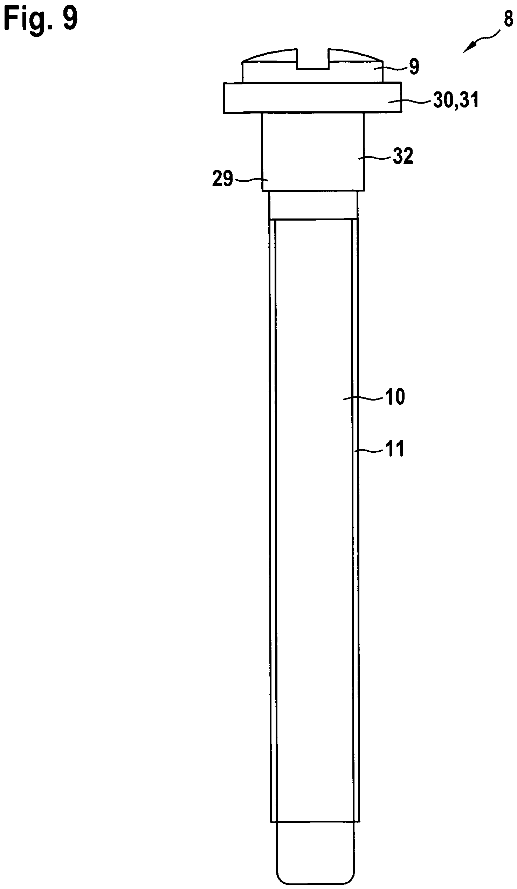

Figur 9 zeigt eine alternative Ausgestaltung, bei welcher der Außendurchmesser des Abschnitts 30 beziehungsweise der Unterlegscheibe 31 größer ist als der des Schraubenkopfs 9, um die Spannkräfte großflächiger auf das Brillenglas 3 zu verteilen.

In beiden Fällen liegt die Schraube 8 mit dem Kunststoffelement 29, beziehungsweise dessen Unterlegscheibe 31, auf der Außenseite des Brillenglases 3 auf. Hierbei werden im Wesentlichen die gleichen Vorteile erzielt, die auch mit der Schraube 15, die das Kunststoffelement 18 aufweist, erreicht. Ebenso ist es denkbar, das Kunststoffelement 29 an der Unterseite beziehungsweise der dem Brillenglas 3 zugewandten Seite der Unterlegscheibe 31 mit einem Profil oder einer Maserung oder durch Materialwahl mit derartigen Reibeigenschaften zu versehen, dass eine Verdrehsicherung bezüglich des Brillenglases 3 gebildet ist. Auch ist es denkbar, eine Metallunterlegscheibe vorzusehen, die an der Seite 14 des Schraubenkopfs 9 anliegt und von dem Kunststoffelement 29 mit eingehaust ist, beispielsweise um eine verbesserte Kraftverteilung in radialer Richtung zu erreichen.

Gemäß einer weiteren, hier nicht dargestellten Ausführungsform ist es denkbar, eine Schraubverbindung vorzusehen, die sowohl die Schraube 8 mit dem Kunststoffteil 29 als auch die Mutter 15 mit dem Kunststoffteil 18 aufweist. Auch ist es denkbar, anstelle von Kunststoff andere Materialien zu verwenden, die sich entsprechend anformen lassen.

## Patentansprüche

1. Schraubverbindung (7) zur Verbindung eines Brillenglases (3) mit einem Brillengestellelement (4), insbesondere eines rahmenlosen Brillengestells (2), mit einer Schraube (8), die einen Schraubenkopf (9) und einen mit einem Außengewinde (11) versehenen Schraubenschaft (10) aufweist, mit einer Mutter (15), die ein mit dem Außengewinde (11) zusammenwirkendes beziehungsweise in Wirkverbindung bringbares Innengewinde (16) aufweist, sowie mit wenigstens einer Unterlegscheibe (21,31), **dadurch gekennzeichnet, dass** an einer dem Brillenglas (3) zugewandten/zuordenbaren Seite (14,17) des Schraubenkopfs (9) und/oder der Mutter (15) ein die Unterlegscheibe (21,31) bildendes Kunststoffelement (18,29) zu dessen Befestigung derart bereichsweise angeformt ist, dass der Schraubenkopf (9) beziehungsweise die Mutter im Wesentlichen frei zugängig ist.

2. Schraubverbindung nach Anspruch 1, **dadurch gekennzeichnet, dass** das Kunststoffelement (18,29) ein angespritztes Kunststoffelement ist.

3. Schraubverbindung nach einem der vorhergehenden Ansprüche, **dadurch gekennzeichnet, dass** die dem Brillenglas (3) zugewande/zuordenbare Seite (14,17) des Schraubenkopfs (9) und/oder der Mutter (15) jeweils einen sich insbesondere über den gesamten Umfang erstreckenden Radialsteg (20) aufweist, der von dem Kunststoffelement (18) zumindest im Wesentlichen umgeben ist.

4. Schraubverbindung nach einem der vorhergehenden Ansprüche, **dadurch gekennzeichnet, dass** der Radialsteg (20) einstückig mit dem Schraubenkopf (9) beziehungsweise mit der Mutter (15) ausgebildet ist.

5. Schraubverbindung nach einem der vorhergehenden Ansprüche, **dadurch gekennzeichnet, dass** die Mutter (15) und/oder die Schraube (9) aus Metall, insbesondere durch Metallpulverspritzguss, gefertigt sind.

6. Schraubverbindung nach einem der vorhergehenden Ansprüche, **dadurch gekennzeichnet, dass** das jeweilige Kunststoffelement (18,29) als Drehsicherung ausgebildet ist.

7. Schraubverbindung nach einem der vorhergehenden Ansprüche, **dadurch gekennzeichnet, dass** das jeweilige Kunststoffelement (18,29) zumindest bereichsweise elastisch verformbar ausgebildet ist.

8. Schraubverbindung nach einem der vorhergehenden Ansprüche, **dadurch gekennzeichnet, dass** das jeweilige Kunststoffelement (18,29) auf seiner dem Brillenglas zugewandten/zuordenbare Seite eine in einer Durchgangsbohrung (13) des Brillenglases (3) einbringbare und den Schraubenschaft (10) aufnehmende Hülse (23,32) aufweist.

9. Schraubverbindung nach einem der vorhergehenden Ansprüche, **dadurch gekennzeichnet, dass** an dem Schraubenkopf (9) und an der Mutter (15) jeweils ein eine Unterlegscheibe (21,31) bildendes Kunststoffelement (18,29) angeformt ist.

10. Brille (1) mit einem insbesondere rahmenlosen Brillengestell (2), das wenigstens ein mit einem Brillenglas (3) mittels wenigstens einer Schraubverbindung (7) verbundenes Brillengestellelement (4) umfasst, **gekennzeichnet durch** die Ausbildung der mindestens einen Schraubverbindung (7) nach einem oder mehreren der vorhergehenden Ansprüche.
